# FASCICULE DE BREVET EUROPEEN

(11) **EP 3 063 898 B1**
(45) Date de publication et mention de la délivrance du brevet: **12.04.2017**
(21) Numéro de dépôt: 14796006.6
(22) Date de dépôt: 30.10.2014
(51) Int. Cl.: H04L 9/32

(54) **SIGNATURE À PSEUDONYME POUR CARTE À PUCE**
PSEUDONYMBASIERTE SIGNATUR FÜR CHIPKARTE
SIGNATURE WITH PSEUDONYM FOR CHIP CARD

(30) Priorité: 31.10.2013 FR 1360726
(43) Date de publication de la demande: 07.09.2016
(73) Titulaire: Morpho, 92130 Issy-les-Moulineaux (FR)
(72) Inventeur: PATEY, Alain, F-92130 Issy-les-Moulineaux (FR); CHABANNE, Hervé, F-92130 Issy-les-Moulineaux (FR); BRINGER, Julien, F-92130 Issy-les-Moulineaux (FR); LESCUYER, Roch, F-92130 Issy-les-Moulineaux (FR)
(74) Mandataire: Regimbeau
(86) Numéro de dépôt international: PCT/EP2014/073402
(87) Numéro de publication internationale: WO 2015/063241

(56) Documents cités:
- JULIEN BRINGER ET AL: "Collusion-Resistant Domain-Specific Pseudonymous Signatures", INTERNATIONAL ASSOCIATION FOR CRYPTOLOGIC RESEARCH,, vol. 20130401:132437, 31 mars 2013 (2013-03-31), pages 1-15, XP061007444,
- TORU NAKANISHI ET AL: "A Short Verifier-Local Revocation Group Signature Scheme with Backward Unlinkability", 1 janvier 2006 (2006-01-01), ADVANCES IN INFORMATION AND COMPUTER SECURITY LECTURE NOTES IN COMPUTER SCIENCE;;LNCS, SPRINGER, BERLIN, DE, PAGE(S) 17 - 32, XP019047442, ISBN: 978-3-540-47699-3 section 4
- BENOîT CHEVALLIER-MAMES ET AL: "Secure Delegation of Elliptic-Curve Pairing", 14 avril 2010 (2010-04-14), SMART CARD RESEARCH AND ADVANCED APPLICATION, SPRINGER BERLIN HEIDELBERG, BERLIN, HEIDELBERG, PAGE(S) 24 - 35, XP019140042, ISBN: 978-3-642-12509-6 sections 1, 3 et 5

## Description

### DOMAINE DE L'INVENTION

La présente invention concerne de façon générale le domaine des signatures numériques.

L'invention concerne plus précisément une nouvelle méthode de signature avec utilisation de pseudonymes (« pseudonymous signatures »), à des fins d'authentification.

Elle s'applique tout particulièrement aux documents d'identité, notamment aux documents de voyage lisibles par machine (*Machine Readable Travel Document, MRTD*) tels que les passeports ou les cartes d'identité comprenant une puce et permettant à un utilisateur de s'authentifier auprès d'un fournisseur de service par l'intermédiaire d'un lecteur.

### ETAT DE LA TECHNIQUE

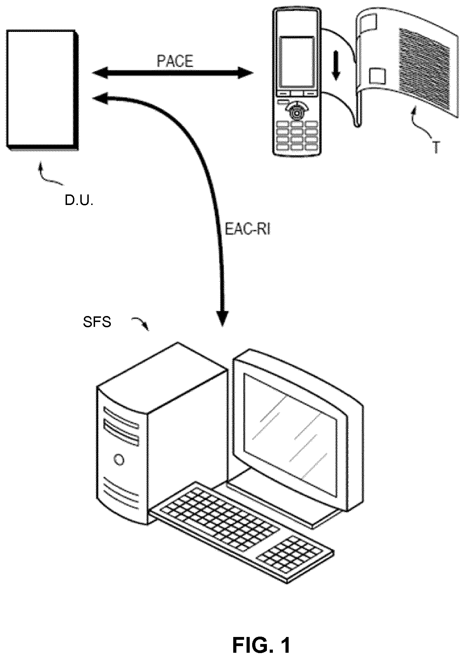

Comme illustré sur la figure 1, pour qu'un détenteur d'un document d'identité D.U de type MRTD puisse accéder à un service proposé par un fournisseur de service, une connexion est établie entre le document d'identité et un terminal du fournisseur de service SFS par l'intermédiaire d'un terminal de lecture T et divers mécanismes de sécurité sont mis en place.

Parmi ces mécanismes, le protocole PACE (Password Authenticated Connection Establishment) permet d'établir un canal sécurisé entre le document d'identité D.U et le terminal de lecture T dès lors que le possesseur du document d'identité a entré un mot de passe, et le protocole EAC (Extended Access Control) permet au document d'identité et au fournisseur de service de s'authentifier mutuellement et d'établir un autre canal sécurisé.

De plus, le protocole RI (Restricted Identification) permet de générer un pseudonyme spécifique à un document d'identité pour un domaine donné regroupant un ensemble de terminaux du fournisseur de service SFS. Ce pseudonyme permet auxdits terminaux d'identifier le document d'identité. Par ailleurs ce protocole satisfait la propriété de « cross-domain anonymity » : il est impossible d'établir un lien entre les pseudonymes utilisés pour des domaines différents pour un même document d'identité.

Ces protocoles sont décrits dans la référence : « Advanced security mechanisms for machine readable travel documents, part 2, Extended Access Control version 2 (EACv2), Password Authenticated Connection Establishment (PACE), and Restricted Identication (RI). Tech. Rep. TR-03110-2, BSI (March 2012), version 2.10.

Ce protocole peut être étendu à l'utilisation de tels pseudonymes pour signer numériquement un message. Une telle variante de ce protocole est décrite dans la référence Bender, J., Dagdelen, O., Fischlin, M., Kugler, D.: Domain-specific pseudonymous signatures for the german identity card. In: Gollmann, D., Freiling, F.C. (eds.) ISC. Lecture Notes in Computer Science, vol. 7483, pp. 104-119, Springer (2012*)* et propose que chaque utilisateur détienne un élément secret, dit clé de signature, généré par une autorité de gestion de clés à partir de sa propre clé secrète, et que cet élément secret soit utilisé à la fois pour signer les messages émis et pour générer le pseudonyme utilisé par cet utilisateur. Ce protocole permet de garantir que l'utilisateur possède une clé de signature valide et non révoquée, et que le pseudonyme utilisé est légitime.

Un tel protocole vérifie les trois propriétés suivantes : « unforgeability », « cross-domain anonymity » et « seclusiveness ».

La propriété d' « unforgeability » assure qu'il est impossible à quiconque de générer une signature à la place d'un détenteur d'un document d'identité.

La propriété de « seclusiveness » assure qu'il est impossible à quiconque de générer une signature valide sans être un utilisateur possédant un document d'identité valide.

Néanmoins ce protocole se fonde sur l'hypothèse que les utilisateurs ne peuvent récupérer leur clé de signature, cette clé étant supposée être stockée sur une puce inviolable d'un document d'identité. En effet, la mise en commun par au moins deux utilisateurs de leurs clés de signature leur permettrait de retrouver la clé secrète de l'autorité de gestion de clés et donc de générer de nouvelles clés valides.

Il existe donc un besoin de proposer un mécanisme de signature sécurisé même en cas de récupération et de mise en commun des clés de signature de plusieurs utilisateurs.

D'autre part, ce protocole suppose également que l'autorité de gestion de clés ne mémorise pas les clés de signature générées pour les utilisateurs, une fois celles-ci délivrées. En effet, la connaissance des clés par l'autorité de gestion de clés lui permettrait de les utiliser pour signer un message à la place de n'importe quel utilisateur légitime. Or, l'absence de mémorisation de ces clés par l'autorité de gestion de clés est difficile à garantir.

Il existe donc également un besoin de proposer un mécanisme de signature garantissant qu'aucune autorité ne puisse signer un message à la place d'un utilisateur.

Par ailleurs, un autre mécanisme de signature connu est celui de la signature de groupe, tel que décrit dans la référence Bringer, J.Patey, A.: VLR group signatures - how to achieve both backward unlinkability and efficient revocation checks. In: SECRYPT. pp. 215-220 (2012*).* Celui-ci permet à un membre d'un groupe de signer un message de manière anonyme au nom du groupe et de prouver l'appartenance de ce membre à ce groupe.

Il prévoit d'associer un secret de groupe à des membres d'un groupe. Il prévoit également d'associer à chaque membre du groupe une clé secrète composée d'une première partie de clé générée par le membre et d'une seconde partie de clé basée à la fois sur la première partie de clé et sur le secret de groupe. La signature d'un message ou challenge par un membre avec sa clé secrète lui permet de prouver qu'il est membre du groupe tout en restant anonyme.

Néanmoins un tel mécanisme ne permet pas à un membre du groupe d'avoir une identité dans ce groupe.

Les références suivantes décrivent également des mécanismes de signature de groupe : David Chaum, Eugène van Heyst: Group Signatures. EUROCRYPT 1991:257-265 et Dan Boneh, Hovav Shacham: Group signatures with verifier-local revocation. ACM Conference on Computer and Communications Security 2004:168-177.

La demande de brevet d'invention français n° 1352650 propose un procédé de signature de groupe à pseudonyme permettant à un membre d'un groupe de signer un message au nom du groupe, tout en ayant une identité dans le groupe. Ce procédé ne présente pas les inconvénients des mécanismes de signature utilisant des pseudonymes cités ci-dessus. En effet, la connaissance de leur clé secrète par les membres d'un groupe ne leur permet pas de se faire passer pour l'autorité de gestion. De plus, l'autorité de gestion n'a pas connaissance d'une partie de la clé secrète de chaque membre du groupe et ne peut donc pas signer de messages en se faisant passer pour un membre.

Néanmoins, la mise en oeuvre d'un tel procédé nécessite l'exécution de calculs complexes par le document d'identité lors de la signature d'un message. Or, les documents d'identités existants comprennent généralement une puce électronique disposant d'une faible puissance de calcul. L'incapacité d'exécution ou la très longue durée d'exécution de tels calculs sur ce type de puce rend donc ce procédé incompatible avec les documents d'identité existants.

Il existe donc un besoin d'un procédé de signature à pseudonyme permettant à un utilisateur de s'authentifier auprès d'un fournisseur de service, tout en présentant un niveau de sécurité au moins aussi élevé que celui des procédés de signature de l'état de la technique, et ne requérant qu'une faible puissance de calcul pour sa mise en oeuvre du côté du signataire, afin qu'un tel procédé de signature à pseudonyme puisse être mis en oeuvre par les documents d'identité existants.

### RESUME DE L'INVENTION

A cet effet, la présente invention se rapporte ainsi selon un premier aspect à un procédé de signature à pseudonyme σ d'un message m par un dispositif utilisateur comprenant des moyens de traitement, des moyens d'interface et des moyens de stockage,

les moyens de stockage dudit dispositif utilisateur stockant une clé de signature secrète sk fonction au moins :
- d'un entier modulaire f constituant une première partie de clé,
- d'un entier modulaire x constituant une deuxième partie de clé,
- d'une troisième partie de clé A égale à (*g*₁*h^{f}*)^{1/(x+γ)}avec :
   ∘ *g*₁ et h des premier et deuxième éléments d'un groupe G₁, lesdits premier et deuxième éléments *g*₁ et h du groupe G₁ étant des paramètres publics et,
   ∘ *g*₂ un élément d'un groupe G₂, ledit élément *g*₂ du groupe G₂ étant un paramètre public,
   ∘ γ un entier modulaire constituant une clé de gestion secrète, telle que w égal à *g*₂^{γ} avec w un paramètre public,
et comprenant les étapes suivantes mises en oeuvre par les moyens de traitement dudit dispositif utilisateur :
- génération d'un pseudonyme nym identifiant l'utilisateur dudit dispositif utilisateur et égal à *h^{f} dpk^{x}*, avec dpk un paramètre de domaine public,
- détermination de premier, deuxième, troisième, quatrième, cinquième et sixième entiers aléatoires modulaires a, r_a, r_f, r_x, r_b, r_d,
- calcul d'un premier coefficient de signature R₁ égal à *h*^{*r*_}*^{f}dpk*^{*r*_}*^{x},*
- calcul d'un deuxième coefficient de signature R₂ égal à *nym^{r_a}h^{-r_d}dpk^{-r_b}*,
- obtention d'un troisième coefficient de signature R₃ égal à Z*^{r_x} V^{a-r_x-r_f-r_b} W^{-r_a}*
avec Z, V et W des premier, deuxième et troisième résultats de couplage respectivement égaux à e(A, *g*₂), e(h, *g*₂) et e(h,w),
et e une application bilinéaire de G₁ x G₂ dans un groupe G_{T}, ladite application e étant un paramètre public,
- obtention d'un premier paramètre de signature T égal à A*h^{a}*,
- calcul d'un deuxième paramètre de signature c en appliquant une fonction de hachage cryptographique H, au paramètre de domaine public dpk, au pseudonyme nym, au premier paramètre de signature T, aux premier, deuxième et troisième coefficients de signature R₁, R₂, R₃ et au message m ,
- calcul de troisième, quatrième, cinquième, sixième et septième paramètres de signature s_f, s_x, s_a, s_b, s_d, respectivement égaux à r_f + c.f, r_x + c.x, r_a + c.a, r_b + c.a.x et r_d + c.a.f,
- génération de ladite signature à pseudonyme σ dudit message m à partir desdits paramètres de signature T, c, s_f, s_x, s_a, s_b et s_d.

Un tel procédé de signature permet à un utilisateur de prouver sa connaissance de la clé de gestion secrète et de signer avec un pseudonyme qui lui est propre, avec un niveau de sécurité au moins égal à celui offert par les procédés de signature existants, tout en limitant la quantité de calculs à faire effectuer au dispositif utilisateur.

Le procédé de signature à pseudonymes selon le premier aspect peut comprendre une étape de génération d'au moins un élément de la première partie de clé f par les moyens de traitement du dispositif utilisateur, une étape de transmission par les moyens d'interface du dispositif utilisateur d'une donnée d'identité générée à partir dudit au moins un élément de ladite première partie de clé généré, de sorte à prouver, par un algorithme de preuve à divulgation nulle de connaissance, à une autorité de gestion de clé la connaissance par le dispositif utilisateur dudit au moins un élément de la première partie de clé généré, une étape de réception par les moyens d'interface du dispositif utilisateur des deuxième x et troisième A parties de clé générées par l'autorité de gestion de clés.

Ceci permet à l'utilisateur de prouver au serveur de gestion des clés sa connaissance de la première partie de sa clé secrète sans la révéler intégralement. Le dispositif utilisateur reste ainsi le seul possesseur de la totalité de sa clé secrète. Dans le cas où la première partie de clé comporte un premier élément généré par le dispositif utilisateur et un deuxième élément généré par le serveur de gestion de clés, ce procédé permet d'augmenter le niveau de sécurité en faisant générer de manière conjointe la première partie de clé par le dispositif utilisateur et le serveur de gestion.

Dans un mode de mise en oeuvre du procédé de signature selon le premier aspect, le premier résultat de couplage Z et/ou les deuxième et troisième résultats de couplage V et W sont calculés préalablement à l'étape d'obtention du troisième coefficient de signature R₃.

Ceci permet d'accélérer le calcul de la signature en précalculant ces éléments.

Les deuxième et troisième résultats de couplages V et W peuvent être des paramètres publics.

Ceci permet aux dispositifs utilisateurs souhaitant vérifier une signature d'avoir ces résultats de couplage à disposition sans avoir à prendre en charge leur calcul.

Le procédé de signature à pseudonyme selon le premier aspect peut comprendre une étape de réception, par les moyens d'interface du dispositif utilisateur, du premier résultat de couplage Z calculé par une unité de traitement d'un serveur de gestion d'une autorité de gestion de clés.

Ceci permet de diminuer la quantité de calculs effectués par le dispositif utilisateur.

Dans une première variante de mise en oeuvre, l'étape d'obtention du premier paramètre de signature T du procédé de signature selon le premier aspect peut comprendre une étape de calcul du premier paramètre de signature T mise en oeuvre par les moyens de traitement du dispositif utilisateur.

Ceci permet de limiter la quantité de données à échanger en réalisant le calcul du premier paramètre de signature directement sur le dispositif utilisateur.

Dans une deuxième variante de mise en oeuvre, l'étape d'obtention du premier paramètre de signature T du procédé de signature selon le premier aspect peut comprendre une étape de transmission par les moyens d'interface du dispositif utilisateur du premier entier aléatoire déterminé a à un dispositif de traitement distant et une étape de réception par les moyens d'interface du dispositif utilisateur du premier paramètre de signature T calculé par le dispositif de traitement distant et égal à A*h^{a}*.

Ceci permet de diminuer la quantité de calculs effectués par le dispositif utilisateur.

Dans un premier mode de mise en oeuvre, l'étape d'obtention du troisième coefficient de signature R₃ du procédé de signature selon le premier aspect peut comprendre une étape de calcul du troisième coefficient de signature R₃ mise en oeuvre par les moyens de traitement du dispositif utilisateur.

Ceci permet de limiter la quantité de données à échanger en réalisant le calcul du troisième paramètre de signature directement sur le dispositif utilisateur.

Dans un deuxième mode de mise en oeuvre, l'étape d'obtention du troisième coefficient de signature R₃ du procédé de signature selon le premier aspect peut comprendre :
- une étape de calcul par les moyens de traitement du dispositif utilisateur d'un quatrième coefficient de signature B₁ égal à *A^{r_x}h*^{*a-r_x-r_f-r*_*b*} et d'un cinquième coefficient de signature B₂ égal à *h*^{-*r_a*},
- une étape de transmission par les moyens d'interface du dispositif utilisateur desdits quatrième et cinquième coefficients de signature B₁ et B₂ à un dispositif de traitement distant,
- une étape de réception par les moyens d'interface du dispositif utilisateur du troisième coefficient de signature R₃, ledit troisième coefficient de signature R₃, étant calculé par le dispositif de traitement distant et égal à e(B1, *g*₂)e(B2,w).

Ceci permet de diminuer la quantité de calculs effectués par le dispositif utilisateur.

Dans un troisième mode de mise en oeuvre, l'étape d'obtention du troisième coefficient de signature R₃ du procédé de signature selon le premier aspect peut comprendre :
- une étape de calcul par les moyens de traitement du dispositif utilisateur d'un sixième coefficient de signature B égal à *A^{r_x}h^{a-r_x-r_f-r_b}*,
- une étape de transmission par les moyens d'interface du dispositif utilisateur du sixième coefficient de signature B et du deuxième entier aléatoire déterminé r_a à un dispositif de traitement distant,
- une étape de réception par les moyens d'interface du dispositif utilisateur du troisième coefficient de signature R₃,
ledit troisième coefficient de signature R₃ étant calculé par ledit dispositif de traitement distant et égal à e(B, g₂) W^{-r}-^{a}.

Ceci permet de diminuer la quantité de calculs effectués par le dispositif utilisateur.

Le procédé de signature selon le premier aspect peut par ailleurs comprendre une étape de réception, par les moyens d'interface du dispositif utilisateur, du paramètre de domaine dpk, le paramètre de domaine dpk étant généré par une autorité de gestion de clés et égal à *g*₁*^{r}* avec r un entier modulaire aléatoire.

Ceci permet de générer de manière déterministe un pseudonyme propre à un utilisateur et propre à un fournisseur de service.

Une autorité de gestion des clés pouvant par ailleurs jouer le rôle d'autorité de gestion pour au moins deux domaines de fournisseur de service, un domaine d'un fournisseur de service comprenant un ensemble de terminaux en communication avec un serveur dudit fournisseur de service, le procédé de signature selon le premier aspect peut comprendre une étape de réception, par les moyens d'interface du dispositif utilisateur, du paramètre de domaine dpkⱼ spécifique à un domaine Dj d'un fournisseur de service FSⱼ, le paramètre de domaine dpkj étant généré par l'autorité de gestion de clés et égal à *g*₁*^{rj}* avec *rⱼ* un entier modulaire aléatoire, ledit pseudonyme généré permettant d'identifier l'utilisateur dudit dispositif utilisateur dans le domaine Dⱼ et ladite signature générée permettant de signer un message dans le domaine Dⱼ.

Ceci permet à l'utilisateur d'être identifié par un pseudonyme particulier sur chaque domaine, de manière déterministe, mais sans que quiconque sauf l'autorité de gestion puisse déterminer si deux pseudonymes dans deux domaines différents peuvent appartenir au même utilisateur.

La présente invention se rapporte selon un deuxième aspect à un procédé de contrôle d'une signature d'un message m et d'un pseudonyme, ladite signature σ et ledit pseudonyme nym étant générés conformément au procédé selon le premier aspect, ledit procédé de contrôle comprenant les étapes suivantes mises en oeuvre par des moyens de traitement d'un serveur de contrôle :
- calcul d'un premier coefficient de contrôle R'₁ égal à *h^{s}-^{f}dpk^{s}-^{x}nym^{-c}*,
- calcul d'un deuxième coefficient de contrôle R'₂ égal à *nym^{s}-^{a}h^{-s}-^{d}dpk^{-s}-*^{b},
- calcul d'un troisième coefficient de contrôle R'₃ égal à e(T,*g*₂)*^{s_x}V^{-s_f-s_b} W^{-s_a}*[e(*g*₁,*g*₂)e(T,w)⁻¹]^{-c},
- calcul d'un paramètre de contrôle c' en appliquant la fonction de hachage H au paramètre de domaine public dpk, au pseudonyme nym, au premier paramètre de signature T, aux premier, deuxième et troisième coefficients de contrôle R₁, R₂, R₃ et au message m,
- comparaison du deuxième paramètre de signature c et du paramètre de contrôle c', ladite signature étant valide en cas d'égalité du deuxième paramètre de signature c et du paramètre de contrôle c' ;

Ceci permet au serveur de contrôle de vérifier que la signature contrôlée a bien été générée par l'utilisateur détenteur légitime du pseudonyme fourni avec la signature.

Les moyens de traitement du serveur de contrôle peuvent également vérifier que le pseudonyme nym de l'utilisateur n'appartient pas à une liste de révocation RL, ladite liste de révocation étant construite à partir de pseudonymes d'utilisateurs révoqués nym.

Une telle utilisation de listes de révocations permet d'exclure facilement un utilisateur d'un ou plusieurs domaines en communiquant son pseudonyme au serveur de contrôle.

La présente invention se rapporte selon un troisième aspect à un programme d'ordinateur comprenant des instructions de code de programme pour l'exécution des étapes du procédé selon le premier aspect lorsque ledit programme est exécuté sur un ordinateur.

La présente invention se rapporte selon un quatrième aspect à un dispositif utilisateur comprenant au moins des moyens de stockage, des moyens de traitement et des moyens d'interface de communication caractérisé en ce qu'il est configuré pour mettre en oeuvre un procédé de signature selon le premier aspect.

La présente invention se rapporte selon un cinquième aspect à une carte à puce comprenant un dispositif utilisateur selon le quatrième aspect.

La présente invention se rapporte selon un sixième aspect à un serveur de contrôle comprenant au moins des moyens de stockage, des moyens de traitement et des moyens d'interface et configuré pour mettre en oeuvre un procédé de contrôle selon le deuxième aspect.

La présente invention se rapporte selon un septième aspect à un système comprenant au moins un dispositif utilisateur selon le quatrième aspect et au moins un serveur de contrôle selon le sixième aspect.

De tels produits programmes d'ordinateur, dispositifs et systèmes présentent les mêmes avantages que ceux évoqués pour les procédés selon le premier aspect et le deuxième aspect.

### DESCRIPTION DES FIGURES

D'autres caractéristiques et avantages ressortiront encore de la description qui suit, laquelle est purement illustrative et non limitative et doit être lue en regard des figures annexées, parmi lesquelles :
La figure 1 illustre des mécanismes de sécurité avancés pour MRTD.
La figure 2 est une représentation schématique d'un exemple de système pour la mise en oeuvre des procédés selon l'invention.
Les figures 3a et 3b forment un ordinogramme représentant les étapes d'un procédé de signature selon un mode de mise en oeuvre de l'invention.
La figure 4 est un ordinogramme représentant les étapes d'une phase d'enregistrement d'un nouvel utilisateur selon un mode de mise en oeuvre de l'invention.
La figure 5 est ordinogramme représentant les étapes d'un procédé de contrôle de signature selon un mode de mise en oeuvre de l'invention.

### DESCRIPTION DETAILLEE D'AU MOINS UN MODE DE REALISATION

### Système

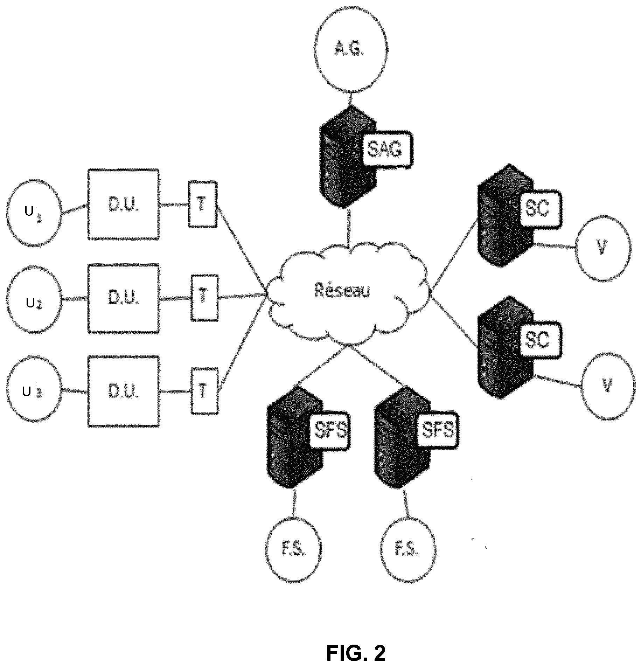

Un système tel que représenté sur la figure 2 comprend un ensemble de dispositifs utilisateurs DU détenus chacun par un utilisateur, des terminaux de lecture T, une autorité de gestion de clés AG, des fournisseurs de services FS et des vérificateurs V, les vérificateurs pouvant être des fournisseurs de service.

L'ensemble des dispositifs utilisateurs, les terminaux de lecture, l'autorité de gestion de clés, les fournisseurs de services et les vérificateurs sont interconnectés par le biais d'un réseau informatique. Un ensemble de terminaux de ce réseau en communication avec un fournisseur de service constitue un domaine.

L'autorité de gestion de clés, les fournisseurs de service et les vérificateurs peuvent être connectés à ce réseau par des serveurs respectifs comprenant une mémoire vive et des moyens de stockage tels qu'une mémoire non volatile réinscriptible (mémoire flash ou mémoire EEPROM) pouvant stocker une base de données, des moyens de traitement comportant un processeur, des unités cryptographiques pour générer notamment des nombres aléatoires, etc... et des moyens d'interface leur permettant de communiquer avec d'autres entités sur le réseau et d'être connectés à des bases de données. De tels serveurs peuvent également comprendre des moyens de saisie et d'interface utilisateur permettant leur administration. Les serveurs des entités précitées sont respectivement dénommés serveur de gestion de clés SAG, serveur de fournisseur de service SFS, et serveur de contrôle SC dans la suite de la description.

Au moins deux de ces serveurs peuvent être réunis au sein d'un même dispositif informatique assurant conjointement les fonctions desdits serveurs.

Le dispositif utilisateur d'un utilisateur peut être compris dans un dispositif électronique portable apte à stocker des données sécurisées lisibles par un terminal de lecture.

Un dispositif électronique portable peut être un document d'identité comprenant une puce dans laquelle sont stockées des données sécurisées par exemple un document de voyage lisible par machine (*Machine Readable Travel Document, MRTD*) tel qu'un passeport ou une carte d'identité, un dispositif de stockage à mémoire flash doté d'une interface de communication USB, dite clé USB (« Universal Serial Bus »), une carte à puce etc...

Le dispositif utilisateur peut comporter une mémoire vive et des moyens de stockage tels qu'une mémoire non volatile réinscriptible (mémoire flash ou mémoire EEPROM), des moyens de traitement comportant un processeur, des unités cryptographiques pour générer notamment des nombres aléatoires etc... Le dispositif utilisateur peut également comporter des moyens d'interface tels qu'une interface de communication sans contact du type interface RFID ou NFC, ou bien une interface de communication sans fil du type interface Bluetooth ou Wifi.

Les données sécurisées stockées peuvent être des données biométriques. Dans ce cas, le dispositif portable ou le dispositif utilisateur peut être muni de capteurs permettant de capturer les données biométriques d'un utilisateur, telles que ses empreintes digitales, palmaires ou rétiniennes.

Un dispositif utilisateur et un terminal de lecture peuvent communiquer par le biais de communications sans fil ou sans contact telles que celles mentionnées ci-dessus. Ils peuvent également communiquer par le biais d'une interface USB, Firewire ou toute autre interface de communication filaire. Ils peuvent également communiquer par le biais d'une interface à contact de carte à puce de type ISO 7816.

Un terminal de lecture peut également comporter une interface de communication filaire ou sans fil, adaptée pour la connexion du terminal au réseau informatique, telle qu'une interface Ethernet, Wifi ou 3G ; et une interface utilisateur permettant à l'utilisateur de contrôler son fonctionnement.

Selon une variante, un dispositif utilisateur et un terminal de lecture peuvent être réunis au sein d'un même dispositif électronique comprenant des moyens d'interface de communication et d'interface utilisateur similaires à ceux décrits ci-dessus.

Dans la description qui suit des opérations pour le calcul de la signature peuvent être déléguées à un dispositif de traitement distant qui peut être le terminal de lecture ou tout autre dispositif distant connecté au dispositif utilisateur et comprenant des moyens de traitement avec une puissance de calcul suffisante pour réaliser ces opérations.

Le réseau reliant les dispositifs utilisateurs et les serveurs consiste à titre d'exemple en un réseau local Ethernet, un réseau local sans fil, le réseau Internet, un réseau de téléphonie mobile... Les communications sur ce réseau peuvent être sécurisées, notamment par chiffrement des données échangées.

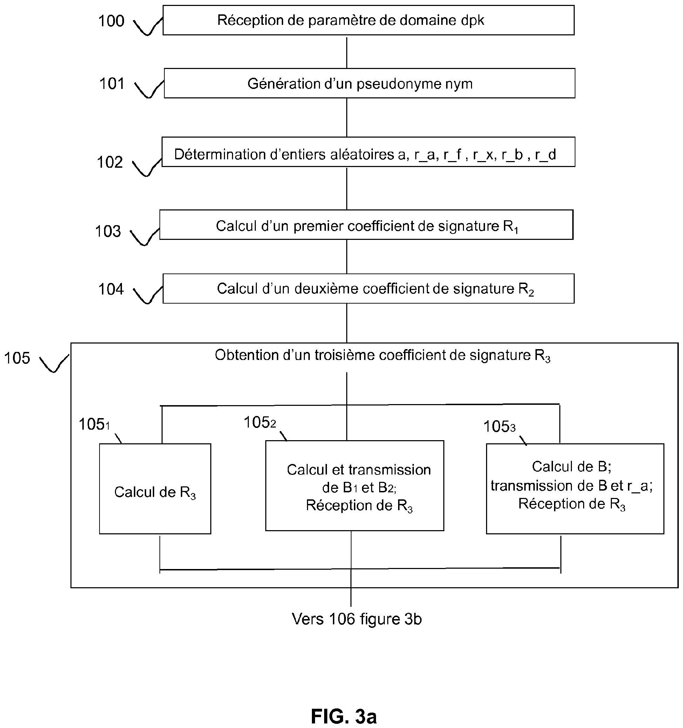

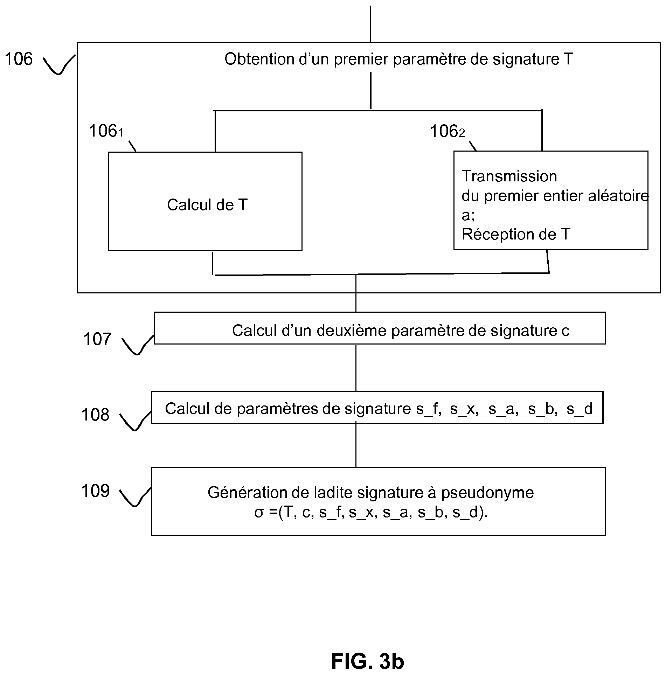

Les étapes du procédé de signature mises en oeuvre par un dispositif utilisateur DU décrites dans les paragraphes suivants sont représentée sur les ordinogrammes des **figures 3a** **et** **3b****.**

### Génération de clés

Le procédé de signature peut comporter une phase de génération de clé mise en oeuvre par le serveur de gestion de clés SAG.

Dans cette phase de génération de clés, les moyens de traitement du serveur de gestion génèrent un ensemble de paramètres publics gpk et un entier modulaire constituant une clé de gestion secrète γ. Ladite clé de gestion γ peut à titre d'exemple appartenir à Zₚ, le corps des entiers relatifs modulo p avec p un nombre premier.

Le serveur de gestion peut déterminer également un paramètre de domaine dpk, ou dpkⱼ spécifique au domaine Dⱼ d'un fournisseur de service SFSⱼ lorsque l'autorité de gestion des clés joue le rôle d'autorité de gestion pour au moins deux domaines de fournisseur de service, un domaine d'un fournisseur de service comprenant un ensemble de terminaux en communication avec un serveur dudit fournisseur de service. Le serveur de gestion transmet ensuite le paramètre de domaine via ses moyens d'interface au serveur du fournisseur de service SFS ou au fournisseur de service SFSⱼ appartenant au domaine Dⱼ. En variante, les fournisseurs de service SFSⱼ peuvent générer eux-mêmes ces paramètres de domaines.

Les paramètres publics gpk sont ensuite rendus publics. Le paramètre de domaine dpkⱼ peut également être rendu public.

Plus précisément, dans un mode de mise en oeuvre de l'invention, au cours de cette phase de génération de clé, les moyens de traitement du serveur de gestion de clés :
▪ déterminent des groupes G₁, G₂, G_{T} qui peuvent à titre d'exemple être bilinéaires d'ordre premier p et une application bilinéaire de G₁ x G₂ dans G_{T} qui peut être une forme bilinéaire et non dégénérée de G₁ x G₂ dans G_{T},
▪ génèrent de manière aléatoire des premier et deuxième éléments du groupe G₁ *g*₁ et h, par exemple des générateurs du groupe G₁, et un élément *g*₂, du groupe G₂, *g*₂ pouvant être par exemple un générateur du groupe G₂,
▪ génèrent de manière aléatoire un entier modulaire γ constituant la clé de gestion secrète, γ pouvant appartenir à Zₚ, et peuvent calculer un paramètre w pouvant être égal à *g*₂^{γ},
▪ déterminent une fonction de hachage cryptographique H

À partir de ces éléments, le serveur de gestion de clés peut générer l'ensemble de paramètres publics gpk = (p, G₁, G₂, G_{T}, e, g₁, h, g₂, w, H).

Le serveur de gestion de clé peut également calculer préalablement un deuxième résultat de couplage V égal à e(h, g₂) et un troisième résultat de couplage W égal à e(h,w). Ces deuxième et troisième résultats de couplage peuvent alors être compris dans l'ensemble des paramètres publics gpk.

La clé de gestion secrète γ ne fait ainsi pas partie des paramètres publics gpk, et n'est détenue que par l'autorité de gestion. La difficulté à mettre en oeuvre l'algorithme du logarithme discret pour un groupe G₂ bien choisi permet de garantir l'impossibilité pratique de retrouver la clé de gestion secrète γ à partir de w. Ainsi la diffusion de w dans l'ensemble de paramètres publics gpk ne pose aucun problème de sécurité du mécanisme de signature.

Pour chaque fournisseur de service FS (ou FSⱼ spécifique au domaine Dⱼ s'il existe plusieurs domaines), le serveur de gestion des clés génère un paramètre de domaine dpk (ou dpk_{j,}). Ce paramètre peut être fonction d'un entier modulaire r (ou rⱼ) pouvant appartenir à Z*ₚ. A titre d'exemple ce paramètre peut être égal à *g*₁*^{r}* (ou *g*₁*^{rj}*). L'entier r (ou rⱼ) peut être généré aléatoirement par le serveur de gestion à l'aide de son unité cryptographique. Le serveur de gestion transmet ensuite ce paramètre via ses moyens d'interface, au serveur du fournisseur de service FS (ou FSⱼ).

Les paramètres publics gpk et le cas échéant le paramètre de domaine dpk ou dpkⱼ peuvent être rendus publics de diverses manières. Ils peuvent être envoyés par les fournisseurs de service FS aux serveurs de contrôle SC et aux dispositifs utilisateurs D.U ou publiés sur un site des fournisseurs de service, lesdits dispositifs utilisateurs les recevant lors d'une étape de réception 100.

### Enregistrement d'un nouvel utilisateur

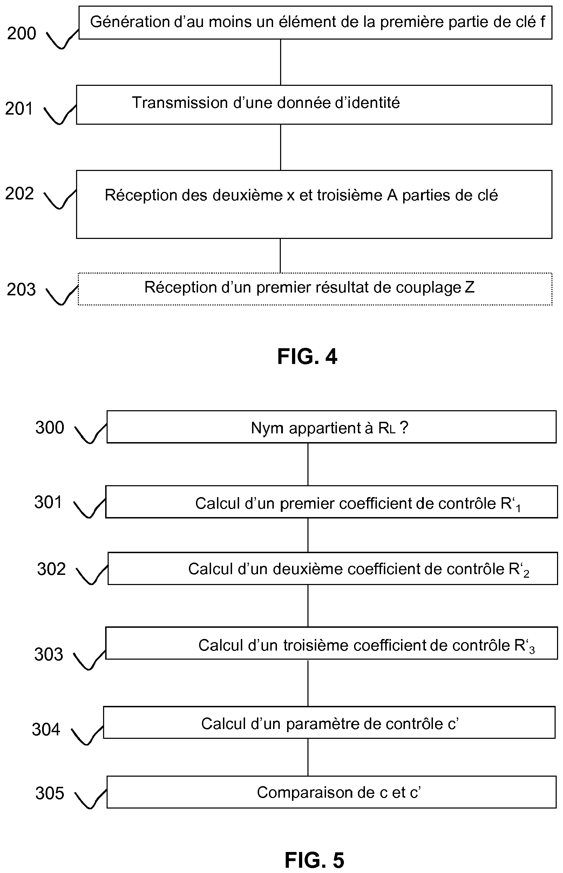

Le procédé de signature peut également comporter une phase dite d'enregistrement d'un nouvel utilisateur Ui auprès de l'autorité de gestion de clé AG consistant à créer une clé de signature secrète sk pour l'utilisateur Ui, représentée en **Figure 4****.**

Pour ce faire, le nouvel utilisateur Ui peut générer à l'aide des moyens de traitement de son dispositif utilisateur DU au moins un premier élément d'une première partie de clé inconnue de l'autorité de gestion de clés AG lors d'une étape de génération 200, transmettre lors d'une étape de transmission 201 par les moyens d'interface de son dispositif utilisateur une donnée d'identité, calculée par ces moyens de traitement à partir d'au moins ce premier élément de cette première partie de clé, au serveur de gestion de clés SAG et prouver à l'autorité de gestion de clés à l'aide de cette donnée d'identité qu'il détient au moins ledit premier élément de la première partie de clé par un algorithme de preuve à divulgation nulle de connaissance (« Zéro knowledge proof »). Le serveur de gestion de clés génère alors puis transmet au nouvel utilisateur la partie de clé manquante formant avec la première partie de clé la clé de signature du nouvel utilisateur, qui reçoit cette partie de clé manquante lors d'une étape de réception 202.

Plus précisément, dans un premier mode de mise en oeuvre de l'invention, au cours de cette phase d'enregistrement :
▪ Les moyens de traitement du dispositif utilisateur du nouvel utilisateur déterminent un entier modulaire f' constituant un premier élément f' de la première partie de clé f, un tel premier élément f' peut à titre d'exemple appartenir à Zₚ, calculent des données d'identité F' égales à *h^{f'}*, calculent une preuve de connaissance à divulgation nulle π du premier élément f' de la première partie de clé f, et transmettent F' et π au serveur de gestion de clés.
▪ Les moyens de traitement du serveur de gestion de clés vérifient π. Si cette vérification est positive le nouvel utilisateur a bien apporté à l'autorité de gestion la preuve qu'il détient le premier élément f' de la première partie de clé f sans le divulguer. Les moyens de traitement du serveur de gestion de clés génèrent alors de manière aléatoire un entier modulaire constituant une deuxième partie de clé x et un entier modulaire constituant un deuxième élément f" de la première partie de clé f puis calculent un nombre F égal à F' *h*^{*f*"} et une troisième partie de clé A égale à (*g*₁F)^{1/(x+γ)}.
▪ Les moyens d'interface du serveur de gestion peuvent transmettre au dispositif utilisateur le deuxième élément f", les deuxième et troisième partie de clé x et A en utilisant un canal de préférence sécurisé.
▪ Le moyens de traitement du dispositif utilisateur calculent alors la première partie de clé f à partir des premier et deuxième éléments de première partie de clé ; cette première partie de clé peut par exemple être égale à f'+f".
▪ De manière optionnelle, les moyens de traitement du dispositif utilisateur vérifient que e(A,*g*₂*^{x}w*) = e(g₁ *h^{f}*, g₂).

La dernière vérification optionnelle permet au membre de vérifier que les seconde et troisième parties de clé A et x ainsi que le deuxième élément f" de la première partie de clé f qui lui ont été transmis n'ont pas été corrompus et sont valides, c'est-à-dire vérifient l'équation A = (*g*₁F)^{1/(x+γ)}.

La preuve π calculée par les moyens de traitement du dispositif utilisateur peut être une preuve de connaissance non interactive à divulgation nulle d'égalité de logarithme discret. Cette preuve peut notamment mettre en oeuvre une double mise en gage pour prouver la connaissance du premier élément f' de la première partie de clé f. La preuve π comporte alors, en sus d'une première valeur chiffrée de preuve, une valeur additionnelle de mise en gage C calculée à partir du premier élément f' de la première partie de clé f par un schéma de mise en gage extractible, tel qu'un schéma de mise en gage parfaitement liant et calculatoirement masquant possédant une clé d'extraction permettant d'extraire la valeur mise en gage.

Un tel mode de mise en oeuvre permet de faire générer de manière conjointe la première partie de clé f par le serveur de gestion de clés et par le dispositif utilisateur, afin de renforcer la sécurité de cette phase d'enregistrement.

Dans un deuxième mode de mise en oeuvre de l'invention, des processus similaires à ceux décrits ci-dessus sont mis en oeuvre au cours de cette phase d'enregistrement mais la première partie de clé f est entièrement déterminée par les moyens de traitement du dispositif utilisateur. La preuve de connaissance à divulgation nulle de connaissance transmise par le dispositif utilisateur au serveur de gestion de clés sert alors à prouver la connaissance de l'intégralité de la première partie de clé f. Les moyens d'interface du serveur de gestion ne transmettent alors au dispositif utilisateur que les deuxième x et troisième A parties de clé. Ceci permet de limiter la quantité d'informations à échanger entre le serveur de gestion de clés et le dispositif utilisateur et d'éviter de faire réaliser certains calculs à ces deux équipements.

Dans de tels modes de mise en oeuvre de l'invention, le nouvel utilisateur est le seul à connaître l'intégralité de sa clé de signature constituée des première, deuxième et troisième parties de clé. Personne, pas même l'autorité de gestion de clés ne peut de ce fait signer un message à la place du nouvel utilisateur.

De façon optionnelle, lors de l'exécution de cette phase d'enregistrement, l'autorité de gestion envoie un premier résultat de couplage Z égal à e(A, g₂) au nouvel utilisateur, qui le reçoit lors d'une étape de réception 203, pour éviter que le dispositif utilisateur de ce dernier n'ait à prendre en charge par la suite le calcul d'un résultat de couplage lors du calcul de la signature.

La clé de signature du nouvel utilisateur ainsi que le premier résultat de couplage Z peuvent être stockés dans des moyens de stockage sécurisés du dispositif utilisateur appartenant au nouvel utilisateur, par exemple dans la mémoire non volatile du dispositif électronique portable correspondant.

De même les deuxième et troisième parties de clé peuvent être stockées par le serveur de gestion de clés, par exemple au sein d'une base de données enregistrée dans les moyens de stockage du serveur de gestion de clés ou bien connectée à celui-ci.

Selon une variante de l'invention, la première partie de clé f ou le premier élément f' de la première partie de clé est calculé à partie d'une donnée biométrique du nouvel utilisateur capturée par les capteurs du dispositif électronique portable ou du dispositif utilisateur ou bien mémorisée par l'un de ceux-ci. La première partie de clé f ou le premier élément f' de la première partie de clé peut également être le résultat de l'application par les moyens de traitement du dispositif électronique portable d'une fonction de hachage à une telle donnée biométrique.

### Génération de pseudonyme

Le procédé de signature peut comporter également une étape de génération 101 d'un pseudonyme identifiant l'utilisateur du dispositif utilisateur DU.

Ce pseudonyme est fonction du paramètre de domaine dpk et de la deuxième partie de clé et peut être égal à h*^{f}dpk^{x}*.

Dans le cas multi domaines, le pseudonyme de l'utilisateur dans le domaine Dⱼ étant formé à partir du paramètre de domaine dpkⱼ spécifique au domaine Dj, l'utilisateur possède des pseudonymes différents dans des domaines distincts. Il est alors impossible pour les fournisseurs de service FS ou vérificateurs V de déterminer si deux messages dans deux domaines distincts présentant des signatures et des pseudonymes différents ont été signés par le même membre (« cross-domain unlinkability »).

### Génération de signature

Le procédé de signature comprend une phase de signature d'un message m. Cette phase de signature peut se faire par exemple dans le cadre du protocole RI (Restricted Identification).

Le message m peut être un défi (« challenge ») transmis préalablement par un serveur de contrôle SC au dispositif utilisateur ou bien n'importe quel type de message à signer par l'utilisateur du dispositif utilisateur DU. Le serveur de contrôle peut également transmettre au dispositif utilisateur le paramètre de domaine dpk (ou dpkj), si celui-ci n'a pas été rendu public ou n'est pas déjà connu dudit utilisateur.

Dans un premier mode de mise en oeuvre de la phase de signature, les moyens de traitement du dispositif utilisateur mettent en oeuvre les étapes suivantes :
- détermination 102 de premier, deuxième, troisième, quatrième, cinquième et sixième entiers modulaires aléatoires a, r_a, r_f, r_x, r_b, r_d pouvant appartenir à Zₚ,
- calcul 103 d'un premier coefficient de signature R₁ égal à *h*^{r_f}*dpk^{r_x}*,
- calcul 104 d'un deuxième coefficient de signature R₂ égal à *nym*^{r_a}*h^{-r_d}dpk^{-r_b}*,
- obtention 105 d'un troisième coefficient de signature R₃ égal à *Z^{r_x} V^{a_r_x-r_f-r_b} W^{-r_a}*,
- obtention 106 d'un premier paramètre de signature T égal à A*h^{a}*,
- calcul 107 d'un deuxième paramètre de signature c en appliquant une fonction de hachage cryptographique H, au paramètre de domaine public dpk, au pseudonyme nym, au premier paramètre de signature T, aux premier, deuxième et troisième coefficients de signature R₁, R₂, R₃ et au message m ; ledit deuxième paramètre de signature peut par exemple être égal à H(dpk ∥ nym ∥ T ∥ R₁ ∥ R₂ ∥ R₃ ∥ m) avec ∥ l'opération de concaténation,
- calcul 108 de troisième, quatrième, cinquième, sixième et septième paramètres de signature s_f, s_x, s_a, s_b, s_d, respectivement égaux à à r_f + c.f, r_x + c.x, r_a + c.a, r_b + c.a.x et r_d + c.a.f,
- génération 109 de ladite signature à pseudonyme σ dudit message m à partir desdits paramètres de signature (T, c, s_f, s_x, s_a, s_b, s_d).

La signature σ est construite de sorte que l'utilisateur du dispositif utilisateur puisse prouver en signant un message ou challenge qu'il a connaissance de la clé de signature secrète sk sans la divulguer, par exemple par un algorithme de preuve à divulgation nulle de connaissance.

De plus, par construction, l'entier modulaire x, qui constitue une seconde partie de clé de signature secrète est utilisé à la fois pour le calcul de la signature σ du message m et pour générer le pseudonyme nym utilisé par l'utilisateur du dispositif utilisateur. Ceci permet de les lier et ainsi de pouvoir prouver à partir de la signature et du pseudonyme que l'utilisateur connait la seconde partie de clé x sans dévoiler cette dernière et que l'utilisateur identifié par le pseudonyme construit à partir de cette seconde partie de clé x est bien le signataire légitime du message m.

Dans une variante de ce premier mode de mise en oeuvre, le premier résultat de couplage Z peut être calculé préalablement à l'étape d'obtention du troisième coefficient de signature R₃.

Le premier résultat de couplage Z peut ainsi être calculé par l'unité de traitement du serveur de gestion de l'autorité de gestion de clés avant la mise en oeuvre de la phase de signature, par exemple lors de la phase d'enregistrement avant d'être transmis au dispositif utilisateur qui le reçoit lors d'une étape de réception 203. Ceci permet d'alléger le dispositif utilisateur et d'accélérer le calcul du résultat de couplage, le serveur de gestion bénéficiant de plus de puissance de calcul que le dispositif utilisateur.

De même les deuxième et troisième résultats de couplage V et W peuvent être calculés préalablement à l'étape d'obtention du troisième coefficient de signature R₃.

Les deuxième et troisième résultats de couplage V et W peuvent par exemple être des paramètres publics générés par l'autorité de gestion et appartenir à l'ensemble des paramètres publics gpk générés.

Ainsi dans cette variante, le dispositif utilisateur réalise tous les calculs permettant de générer la signature dans les groupes G1 et GT mais n'effectue pas d'opérations dans le groupe G2 et ne calcule pas de couplages qui sont les opérations les plus coûteuses en terme de puissance de calcul et sont très rarement implantées sur des cartes à puces. Ainsi dans le cas d'une puce par exemple implantée dans un document d'identité MRTD lisible par un terminal de lecture, la puce ne réalise que les opérations les moins coûteuses en terme de puissance de calcul et le terminal de lecture se contente de transférer les messages entre la puce et le fournisseur de service.

L'étape d'obtention du premier paramètre de signature T peut comprendre une étape de calcul du premier paramètre de signature T 106₁ mise en oeuvre par les moyens de traitement du dispositif utilisateur.

De manière alternative, l'étape d'obtention du premier paramètre de signature T peut comprendre une étape 106₂ de transmission par les moyens d'interface du dispositif utilisateur du premier entier aléatoire déterminé a à un dispositif de traitement distant pouvant être un terminal de lecture et de réception par les moyens d'interface du dispositif utilisateur du premier paramètre de signature T calculé par le dispositif de traitement distant et égal à A*h^{a}*. Ceci permet d'utiliser la puissance de calcul du dispositif de traitement distant et d'alléger les calculs réalisés dans le dispositif utilisateur.

Dans un premier mode de mise en oeuvre, l'étape d'obtention du troisième coefficient de signature R₃ peut comprendre une étape de calcul du troisième coefficient de signature R₃ 105₁ mise en oeuvre par les moyens de traitement du dispositif utilisateur à l'aide des premier, deuxième et troisième résultats de couplage Z, V, W obtenus selon les différentes variantes présentées ci-dessus.

Dans un deuxième mode de mise en oeuvre, l'étape d'obtention du troisième coefficient de signature R₃ peut comprendre une étape 105₂ :
- de calcul par les moyens de traitement du dispositif utilisateur d'un quatrième coefficient de signature B₁ égal à *A^{r_x}h^{a-r_x-r_f-r_b}* et d'un cinquième coefficient de signature B₂ égal à *h*^{-*r*_*a*},
- de transmission par les moyens d'interface du dispositif utilisateur desdits quatrième et cinquième coefficients de signature B₁ et B₂ à un dispositif de traitement distant pouvant être un terminal de lecture,
- de réception par les moyens d'interface du dispositif utilisateur du troisième coefficient de signature R₃, ledit troisième coefficient de signature R3 étant calculé par le dispositif de traitement distant et égal à e(B1, g₂)e(B2,w).

Dans un troisième mode de mise en oeuvre, l'étape d'obtention du troisième coefficient de signature R₃, peut comprendre une étape 105₃ :
- de calcul par les moyens de traitement du dispositif utilisateur d'un sixième coefficient de signature B égal à *A^{r_x}h^{a-r_x-r_f-r_b}*,
- de transmission par les moyens d'interface du dispositif utilisateur du sixième coefficient de signature B et du deuxième entier aléatoire déterminé r_a à un dispositif de traitement distant,
- de réception par les moyens d'interface du dispositif utilisateur du troisième coefficient de signature R₃.
ledit troisième coefficient de signature R₃ étant calculé par ledit dispositif de traitement distant et égal à e(B,g₂) W^{-r_a}.

Selon ces deuxième et troisième modes de mises en oeuvre, le dispositif utilisateur ne réalise que des opérations dans un seul groupe et uniquement des exponentiations. De plus, les calculs les plus coûteux sont réalisés par le dispositif de traitement distant, ce dernier possédant une puissance de calcul plus importante que le dispositif utilisateur sans que le dispositif utilisateur ne dévoile la clé secrète de l'utilisateur de sorte à être protégé contre un terminal de lecture malveillant.

A l'issue de cette phase de signature, le dispositif utilisateur DU transmet par ses moyens d'interface de communication, et éventuellement par l'intermédiaire du terminal de lecture T, la signature σ obtenue et le pseudonyme correspondant à l'utilisateur du dispositif utilisateur au serveur de contrôle SC qui lui a envoyé le challenge à signer, ou bien au destinataire du message m auquel il envoie également le message m.

Pour un niveau élevé de sécurité équivalent au niveau offert par une clé RSA de 3072 bits, la signature σ ainsi que le pseudonyme obtenus pèsent ensemble environ 2 Kbits. Dans les modes de mise en oeuvre déléguant le calcul de certains éléments de la signature à un dispositif de traitement distant, le dispositif utilisateur envoie quelques centaines de bits de données au dispositif de traitement distant qui lui renvoie ensuite environ 3 Kbits de données.

### Contrôle de signature

Afin de contrôler la signature σ d'un message m et d'un pseudonyme nym générés selon le procédé de signature décrit ci-dessus, des moyens de traitement d'un serveur de contrôle SC peuvent mettre en oeuvre un procédé de contrôle de signature qui comprend les étapes suivantes, représentées en **Figure 5** **:**
- une étape de calcul 301 d'un premier coefficient de contrôle R'₁, avec R'₁ égal à *h*^{*s*_f}*dpk*^{s}*^{_x}nym*^{-c},
- une étape de calcul 302 d'un deuxième coefficient de contrôle R'₂, avec R'₂ égal à *nym*^{*s_*a}*h^{-s_d}dpk^{-s_b}*,
- une étape de calcul 303 d'un troisième coefficient de contrôle R'₃, avec R'₃ égal à *e*(*T*,*g₂*)*^{s_x}V^{-s_f-s_b} W^{-s_a}*[e(*g*₁,*g*₂)e(T,w)⁻¹]^{-c},
- une étape de calcul 304 d'un paramètre de contrôle c' en appliquant la fonction de hachage H au paramètre de domaine public dpk, au pseudonyme nym, au premier paramètre de signature T, aux premier, deuxième et troisième coefficients de contrôle R₁, R₂, R₃ et au message m ; c' peut par exemple être égal à H(dpk ∥ nym ∥ T ∥ R'₁ ∥ R'₂ ∥ R'3 ∥ m),
- une étape de comparaison 305 du deuxième paramètre de signature c et du paramètre de contrôle c', ladite signature étant valide en cas d'égalité du deuxième paramètre de signature c et du paramètre de contrôle c'.

Ce procédé de contrôle de signature permet ainsi de contrôler, à partir de la signature σ et du pseudonyme nym, que l'utilisateur a connaissance de la clé de signature secrète sk, et que le pseudonyme et la signature de l'utilisateur sont liés, c'est-à-dire que ledit pseudonyme et ladite signature sont fonction d'une partie de ladite clé de signature secrète. Si cette vérification est positive, le pseudonyme reçu avec la signature est bien celui du signataire.

Pour vérifier la signature d'un message m et le pseudonyme de l'utilisateur détenant le dispositif utilisateur, le serveur de contrôle n'a besoin ainsi que de connaitre cette signature et ce pseudonyme ainsi que les paramètres de domaine dpk et les paramètres publics gpk. Le serveur de contrôle n'a notamment pas connaissance de la clé de signature secrète de l'utilisateur. Aucun serveur de contrôle ne peut de ce fait signer un message à la place de l'utilisateur, ni connaitre le pseudonyme de l'utilisateur dans plusieurs domaines et relier les signatures et pseudonymes de cet utilisateur pour différents domaines. De ce fait il est impossible, quand on observe deux pseudonymes pour deux domaines différents, de dire s'ils correspondent ou non au même utilisateur.

### Révocation

Des utilisateurs pouvant s'enregistrer ou quitter le système à des instants différents ou bien des utilisateurs pouvant perdre leur capacité de signature, un mécanisme de révocation peut être mis en place permettant que les utilisateurs enregistrés puissent être ultérieurement révoqués, soit dans tout le système c'est-à-dire dans tous les domaines, soit dans un sous-ensemble de domaines.

Une liste de révocation peut être établie pour chaque domaine et mise à jour par l'autorité de gestion AG.

Une telle liste de révocation RLⱼ pour le domaine Dj est construite à partir des pseudonymes nymⱼ des utilisateurs révoqués et stockée dans une base de données de révocation BDⱼ.

Pour ce faire, lorsqu'un domaine est créé, une telle liste de révocation initialement vide peut être créée pour ce domaine. Cette liste peut être créée en même temps que le paramètre de domaine dpkj.

Lors de la phase d'enregistrement, l'autorité de gestion peut stocker dans une table de révocation un jeton de révocation rt associé au nouvel utilisateur enregistré fonction de la deuxième partie de clé x et du nombre F calculé, par exemple égal au couple (F, x).

Selon un premier mode de réalisation, lorsque l'autorité de gestion souhaite révoquer un utilisateur dans un domaine Dⱼ, le serveur de gestion SAG récupère le jeton de révocation rt stocké dans la table de révocation et le transmet au serveur SFSⱼ du fournisseur de service FS_{j.} Le serveur du fournisseur de service SFSⱼ calcule alors le pseudonyme correspondant nymⱼ, égal à F(dpkⱼ)^{x}, et l'ajoute dans la liste de révocation RLⱼ de la base de données de révocation BDⱼ.

Selon un deuxième mode de réalisation, lorsque l'autorité de gestion AG souhaite révoquer un utilisateur dans un ensemble de domaine Dj, le serveur de gestion SAG récupère le jeton de révocation rt associé à l'utilisateur stocké dans la table de révocation et le paramètre de domaine dpkⱼ, génère une information auxiliaire correspondant au pseudonyme nymⱼ de l'utilisateur égal à F(dpkⱼ)^{x} et la transmet à chaque serveur SFSⱼ du fournisseur de service FSⱼ. Chaque serveur du fournisseur de service FSⱼ ajoute le pseudonyme nymⱼ dans la liste de révocation RLⱼ de la base de données de révocation BDⱼ.

Ceci permet d'éviter de transmettre sur le réseau une partie de la clé secrète de l'utilisateur.

Selon un troisième mode de réalisation, la révocation d'un utilisateur peut être à l'initiative d'un fournisseur de service FSⱼ. Un serveur SFSⱼ du fournisseur de service FSⱼ ajoute le pseudonyme de l'utilisateur qu'il souhaite révoquer dans la liste de révocation RLⱼ de la base de données de révocation BDⱼ.

Le procédé de contrôle peut alors également comprendre une étape de vérification de révocation 300 consistant à vérifier que l'utilisateur n'a pas été révoqué dans l'ensemble des domaines ou dans un sous ensemble de domaines.

Pour ce faire, les moyens de traitement du serveur de contrôle SC vérifient dans la base de données de révocation BDⱼ que le pseudonyme nymⱼ du signataire n'appartient pas à la liste de révocation RLⱼ.

Dans un mode de mise en oeuvre si le serveur de contrôle détermine que l'utilisateur a été révoqué, il ne met pas en oeuvre les étapes du procédé de contrôle décrites ci-dessus et ne vérifie donc pas la validité de la signature.

D'autre part, la liste de révocation n'est pas prise en compte lors de la signature. Cela permet de ne pas avoir à renouveler les clés des utilisateurs valides après une révocation d'un utilisateur et n'implique pas de calculs supplémentaires pour le signataire.

De plus, lors de l'étape de vérification de la révocation d'un utilisateur, les moyens de traitement du serveur de contrôle n'ont qu'un test d'appartenance à une liste à réaliser et non un nombre linéaire d'opérations arithmétiques comme dans les mécanismes de signature de groupe connus.

Selon une variante de l'invention, on utilise des listes d'utilisateurs valides au lieu de listes de révocation. Lors de l'étape de vérification de révocation 300, le serveur de contrôle doit alors vérifier que le pseudonyme de l'utilisateur appartient bien à la liste de membres valides.

Les bases de données de stockage de ces listes peuvent être stockées sur les serveurs des fournisseurs de service. Selon une variante, ces listes peuvent être mémorisées dans une base de données commune stockée sur le serveur de gestion des clés.

Ainsi un tel procédé de signature à pseudonymes permettant à un utilisateur de s'authentifier auprès d'un fournisseur de service, tout en présentant un niveau de sécurité au moins aussi élevé que celui des procédés de signature de l'état de la technique, peut être mis en oeuvre sur des cartes à puces disposant d'une faible puissance de calcul et notamment sur des cartes à puces existantes.

## Revendications

1. Procédé de signature à pseudonyme (σ) d'un message (m) par un dispositif utilisateur (DU) comprenant des moyens de traitement, des moyens d'interface et des moyens de stockage,
les moyens de stockage dudit dispositif utilisateur stockant une clé de signature secrète (sk) fonction au moins :
∘ d'un entier modulaire f constituant une première partie de clé,
∘ d'un entier modulaire x constituant une deuxième partie de clé,
∘ d'une troisième partie de clé A égale à (*g*₁*h^{f}*)^{1/(x+γ)} avec :
∘ *g*₁ et h des premier et deuxième éléments d'un groupe G₁, lesdits premier et deuxième éléments *g*₁ et h du groupe G₁ étant des paramètres publics et,
∘ *g*₂ un élément d'un groupe G₂, ledit élément *g*₂ du groupe G₂ étant un paramètre public,
∘ γ un entier modulaire constituant une clé de gestion secrète, tel que w égal à *g*₂^{γ} avec w un paramètre public,
et comprenant les étapes suivantes mises en oeuvre par les moyens de traitement dudit dispositif utilisateur :
∘ génération (101) d'un pseudonyme nym identifiant l'utilisateur (U) dudit dispositif utilisateur et égal à *h^{f}dpk^{x}*, avec dpk un paramètre de domaine public,
∘ détermination (102) de premier, deuxième, troisième, quatrième, cinquième et sixième entiers aléatoires modulaires a, r_a, r_f, r_x, r_b, r_d,
∘ calcul (103) d'un premier coefficient de signature R₁ égal à *h*^{r_f}*dpk^{r_x}*,
∘ calcul (104) d'un deuxième coefficient de signature R₂ égal à *nym^{r_a}h^{-r_d}dpk^{-r_b}*,
∘ obtention (105) d'un troisième coefficient de signature R₃ égal à *Z^{r_x}V^{a-r_x-r_f-r_b}W^{-r_a}*,
avec Z, V et W des premier, deuxième et troisième résultats de couplage respectivement égaux à e(A, *g*₂), e(h, *g*₂) et e(h,w),
et e une application bilinéaire de G₁ x G₂ dans un groupe G_{T}, ladite application e étant un paramètre public,
∘ obtention (106) d'un premier paramètre de signature T égal à A*h^{a}*,
∘ calcul (107) d'un deuxième paramètre de signature c en appliquant une fonction de hachage cryptographique H au paramètre de domaine public dpk, au pseudonyme nym, au premier paramètre de signature T, aux premier, deuxième et troisième coefficients de signature R₁, R₂, R₃ et au message m,
∘ calcul (108) de troisième, quatrième, cinquième, sixième et septième paramètres de signature s_f, s_x, s_a, s_b, s_d, respectivement égaux à r_f + c.f, r_x + c.x, r_a + c.a, r_b + c.a.x et r_d + c.a.f,
∘ génération (109) de ladite signature à pseudonyme (σ) dudit message (m) à partir desdits paramètres de signature (T, c, s_f, s_x, s_a, s_b, s_d).

2. Procédé de signature à pseudonymes selon la revendication 1, comprenant une étape de génération (200) d'au moins un élément de la première partie de clé (f) par les moyens de traitement du dispositif utilisateur (DU), une étape de transmission (201) par les moyens d'interface du dispositif utilisateur d'une donnée d'identité générée à partir dudit au moins un élément de ladite première partie de clé généré, de sorte à prouver, par un algorithme de preuve à divulgation nulle de connaissance, à une autorité de gestion de clé (AG) la connaissance par le dispositif utilisateur dudit au moins un élément de la première partie de clé généré, une étape de réception (202) par les moyens d'interface du dispositif utilisateur des deuxième (x) et troisième (A) parties de clé générées par l'autorité de gestion de clés.

3. Procédé de signature à pseudonyme selon l'une des revendications précédentes, dans lequel le premier résultat de couplage (Z) et/ou les deuxième et troisième résultats de couplage (V, W) sont calculés préalablement à l'étape d'obtention du troisième coefficient de signature (R₃).

4. Procédé de signature à pseudonyme selon l'une des revendications précédentes, dans lequel les deuxième et troisième résultats de couplages (V, W) sont des paramètres publics.

5. Procédé de signature à pseudonyme selon l'une des revendications précédentes, comprenant une étape de réception (203), par les moyens d'interface du dispositif utilisateur, du premier résultat de couplage (Z) calculé par une unité de traitement d'un serveur de gestion (SAG) d'une autorité de gestion de clés.

6. Procédé de signature à pseudonyme selon l'une des revendications précédentes, dans lequel l'étape d'obtention (106) du premier paramètre de signature (T) comprend une étape de calcul (1061) du premier paramètre de signature (T) mise en oeuvre par les moyens de traitement du dispositif utilisateur.

7. Procédé de signature à pseudonyme selon l'une des revendications 1 à 5, dans lequel l'étape d'obtention (106) du premier paramètre de signature (T) comprend une étape de transmission (1062) par les moyens d'interface du dispositif utilisateur du premier entier aléatoire déterminé (a) à un dispositif de traitement distant et une étape de réception (1062) par les moyens d'interface du dispositif utilisateur du premier paramètre de signature (T) calculé par le dispositif de traitement distant et égal à A*h^{a}*.

8. Procédé de signature à pseudonyme selon l'une des revendications précédentes, dans lequel l'étape d'obtention (105) du troisième coefficient de signature (R₃) comprend une étape de calcul (1051) du troisième coefficient de signature (R₃) mise en oeuvre par les moyens de traitement du dispositif utilisateur.

9. Procédé de signature à pseudonyme selon l'une des revendications 1 à 7, dans lequel l'étape d'obtention (105) du troisième coefficient de signature (R₃) comprend :
- une étape de calcul (1052) par les moyens de traitement du dispositif utilisateur d'un quatrième coefficient de signature B₁ égal à *A^{r_x}h^{a-r_x-r_f-r_b}* et d'un cinquième coefficient de signature B₂ égal à *h*^{-r_*a*},
- une étape de transmission (1052) par les moyens d'interface du dispositif utilisateur desdits quatrième et cinquième coefficients de signature B₁ et B₂ à un dispositif de traitement distant,
- une étape de réception (1052) par les moyens d'interface du dispositif utilisateur du troisième coefficient de signature (R₃), ledit troisième coefficient de signature (R₃), étant calculé par le dispositif de traitement distant et égal à e(B1, *g*₂)e(B2,w).

10. Procédé de signature selon l'une des revendications 1 à 7, dans lequel l'étape d'obtention (105) du troisième coefficient de signature (R₃), comprend :
- une étape de calcul (1053) par les moyens de traitement du dispositif utilisateur d'un sixième coefficient de signature B égal à *A^{r_x}h^{a-r_x-r_f-r_b}*,
- une étape de transmission (1053) par les moyens d'interface du dispositif utilisateur du sixième coefficient de signature B et du deuxième entier aléatoire déterminé (r_a) à un dispositif de traitement distant,
- une étape de réception (1053) par les moyens d'interface du dispositif utilisateur du troisième coefficient de signature (R₃),
ledit troisième coefficient de signature (R₃) étant calculé par ledit dispositif de traitement distant et égal à e(B, g₂) W^{-r_a}.

11. Procédé de contrôle d'une signature d'un message (m) et d'un pseudonyme, ladite signature (σ) et ledit pseudonyme (nym) étant générés selon le procédé de l'une quelconque des revendications précédentes, ledit procédé de contrôle comprenant les étapes suivantes mises en oeuvre par des moyens de traitement d'un serveur de contrôle (SC) :
∘ Calcul (301) d'un premier coefficient de contrôle R'₁ égal à *h^{s_f}dpk^{s_x}nym^{-c}*,
∘ calcul (302) d'un deuxième coefficient de contrôle R'₂ égal à *nym*^{*s*_}*^{a}h*^{*-*s_}*^{d}dpk^{-s_b}*,
∘ calcul (303) d'un troisième coefficient de contrôle R'₃ égal à e(T,*g*₂)^{*s*_}*^{x}V*⁻*^{s_f} W*^{-*s*_*a*}[e(*g*₁,*g*₂)e(T,w)⁻¹]^{-c},
∘ calcul (304) d'un paramètre de contrôle c' en appliquant une fonction de hachage H à un paramètre de domaine public (dpk), au pseudonyme (nym), à un premier paramètre de signature (T), aux premier, deuxième et troisième coefficients de contrôle (R'_{1,} R'₂, R'₃) et au message (m),
∘ comparaison (305) d'un deuxième paramètre de signature (c) et du paramètre de contrôle (c'), ladite signature étant valide en cas d'égalité du deuxième paramètre de signature (c) et du paramètre de contrôle (c'),
avec :
∘ f un entier modulaire constituant une première partie de clé, x un entier modulaire constituant une deuxième partie de clé, A une troisième partie de clé égale à (*g*₁*h^{f}*)^{1/(x+γ)},
∘ *g*₁ et h des premier et deuxième éléments d'un groupe G₁, lesdits premier et deuxième éléments *g*₁ et h du groupe G₁ étant des paramètres publics et,
∘ *g*₂ un élément d'un groupe G₂, ledit élément *g*₂ du groupe G₂ étant un paramètre public,
∘ γ un entier modulaire constituant une clé de gestion secrète, tel que w égal à *g*₂^{γ} avec w un paramètre public,
∘ e une application bilinéaire de G₁ x G₂ dans un groupe G_{T}, ladite application e étant un paramètre public,
∘ Z, V et W des premier, deuxième et troisième résultats de couplage respectivement égaux à e(A, *g*₂), e(h, *g*₂) et e(h,w),
∘ a, r_a, r_f, r_x, r_b, r_d de premier, deuxième, troisième, quatrième, cinquième et sixième entiers aléatoires modulaires,
∘ T un premier paramètre de signature égal à *Ah^{a}*,
∘ c un deuxième paramètre de signature calculé en appliquant la fonction de hachage cryptographique H au paramètre de domaine public dpk, au pseudonyme nym, au premier paramètre de signature T, à des premier, deuxième et troisième coefficients de signature R₁, R₂, R₃ et au message m, où le premier coefficient de signature R₁ est égal à *h*^{r_f}*dpk*^{*r*_*x*}, le deuxième coefficient de signature R₂ est égal à *nym^{r_a}h*⁻*^{r_d}dpk*^{-*r_b*}, le troisième coefficient de signature R₃ est égal à *Z^{r_x}V^{a-r_x-r_f-r_b}W^{-r_a}*, et
∘ s_f, s_x, s_a, s_b, s_d de troisième, quatrième, cinquième, sixième et septième paramètres de signature respectivement égaux à r_f + c.f, r_x + c.x, r_a + c.a, r_b + c.a.x et r_d + c.a.f,

12. Programme d'ordinateur comprenant des instructions de code de programme pour l'exécution des étapes du procédé selon l'une quelconque des revendications précédentes lorsque ledit programme est exécuté sur un ordinateur.

13. Dispositif utilisateur (DU) comprenant au moins des moyens de stockage, des moyens de traitement et des moyens d'interface de communication **caractérisé en ce qu'**il est configuré pour mettre en oeuvre un procédé de signature selon l'une quelconque des revendications 1 à 10.

14. Serveur de contrôle (SC) comprenant au moins des moyens de stockage, des moyens de traitement et des moyens d'interface **caractérisé en ce qu'**il est configuré pour mettre en oeuvre un procédé de contrôle selon la revendication 11.

15. Système **caractérisé en ce qu'**il comprend au moins un dispositif utilisateur (DU) selon la revendication 13 et au moins un serveur de contrôle (SC) selon la revendication 14.

## Patentansprüche

1. Signaturverfahren mit Pseudonym (σ) einer Mitteilung (m) durch ein Benutzergerät (DU), das Verarbeitungsmittel, Schnittstellenmittel und Speichermittel umfasst,
wobei die Speichermittel der Benutzervorrichtung einen geheimen Signaturcode (sk) speichern, der von mindestens Folgendem abhängt:
∘ einer modularen Ganzzahl f, die einen ersten Codeteil bildet,
∘ einer modularen Ganzzahl x, die einen zweiten Codeteil bildet,
∘ einem dritten Codeteil A, der gleich (*g*ₗ*h^{f}*)^{1/(*x*+γ)} ist, wobei:
∘ *g*₁ und h erste und zweite Elemente einer Gruppe G₁ sind, wobei das erste und das zweite Element, *g*₁ und h der Gruppe G₁ öffentliche Parameter sind, und
∘ *g*₂ ein Element einer Gruppe G₂ ist, wobei das Element *g*₂ der Gruppe G₂ ein öffentlicher Parameter ist,
∘ γ eine modulare Ganzzahl ist, die einen geheimen Verwaltungscode bildet, so dass w gleich *g*₂^{γ} ist, wobei w ein öffentlicher Parameter ist,
und die folgenden Schritte umfasst, die von den Verarbeitungsmittel des Benutzergeräts ausgeführt werden:
∘ Erzeugen (101) eines Pseudonyms nym, das den Benutzer (U) des Benutzergeräts identifiziert und gleich *h^{f}dpk^{x}* ist, wobei dpk ein Parameter des öffentlichen Bereichs ist,
∘ Bestimmen (102) einer ersten, zweiten, dritten, vierten, fünften und sechsten zufälligen modularen Ganzzahl a, r_a, r_f, r_x, r_b, r_d,
∘ Berechnen (103) eines ersten Signaturkoeffizienten R₁ gleich *h^{r_f}dpk^{r_x}*,
∘ Berechnen (104) eines zweiten Signaturkoeffizienten R₂ gleich *nym^{r_a}h^{-r_d}dpk^{-r_b}*,
∘ Erhalten (105) eines dritten Signaturkoeffizienten R₃ gleich *Z^{r_x}V^{a-r_x-r_f-r_b}W^{-r_a}*,
wobei Z, V und W ein erstes, zweites und drittes Kopplungsresultat jeweils gleich e(A, *g*₂), e(h, *g*₂) und e(h,w) sind,
und e eine bilineare Anwendung von G₁ x G₂ in einer Gruppe G_{T} ist, wobei die Anwendung e ein öffentlicher Parameter ist,
∘ Erhalten (106) eines ersten Signaturparameters T gleich *Ah^{a}*,
∘ Berechnen (107) eines zweiten Signaturparameters c durch Anwenden einer kryptografischen Hashfunktion H auf den Parameter des öffentlichen Bereichs dpk, auf das Pseudonym nym, auf den ersten Signaturparameter T, auf den ersten, zweiten und dritten Signaturkoeffizienten R₁, R₂, R₃ und auf die Mitteilung m,
∘ Berechnen (108) eines dritten, vierten, fünften, sechsten und siebten Signaturparameters s_f, s_x, s_a, s_b, s_d jeweils gleich r_f + c.f, r_x + c.x, r_a + c.a, r_b + c.a.x und r_d + c.a.f,
∘ Erzeugen (109) der Signatur mit Pseudonym (σ) der Mitteilung (m) ausgehend von den Signaturparametern (T, c, s_f, s_x, s_a, s_b, s_d).

2. Signaturverfahren mit Pseudonymen nach Anspruch 1, das einen Erzeugungsschritt (200) mindestens eines Elements des ersten Codeteils (f) durch die Verarbeitungsmittel des Benutzergeräts (DU), einen Übertragungsschritt (201) durch die Schnittstellenmittel des Benutzergeräts einer Identitätsinformation, die ausgehend von dem mindestens einen Element des ersten erzeugten Codeteils erzeugt wird, umfasst, so dass durch einen Beweisalgorithmus mit Null-Kenntnis, einer Codeverwaltungsstelle (AG) die Kenntnis durch das Benutzergerät des mindestens einen Elements des ersten erzeugten Codeteils bewiesen wird, einen Schritt des Empfangens (202) durch die Schnittstellenmittel des Benutzergeräts des zweiten (x) und dritten (A) Codeteils, die von der Codeverwaltungsstelle erzeugt werden.

3. Signaturverfahren mit Pseudonym nach einem der vorhergehenden Ansprüche, wobei das erste Kopplungsresultat (Z) und/oder das zweite und dritte Kopplungsresultat (V, W) vor dem Schritt des Erhaltens des dritten Signaturkoeffizienten (R₃) berechnet werden.

4. Signaturverfahren mit Pseudonym nach einem der vorhergehenden Ansprüche, wobei das zweite und das dritte Kopplungsresultat (V, W) öffentliche Parameter sind.

5. Signaturverfahren mit Pseudonym nach einem der vorhergehenden Ansprüche, das einen Schritt des Empfangens (203) durch die Schnittstellenmittel des Benutzergeräts des ersten Kopplungsresultats (Z), das von einer Verarbeitungseinheit eines Verwaltungsservers (SAG) einer Codeverwaltungsstelle berechnet wird, umfasst.

6. Signaturverfahren mit Pseudonym nach einem der vorhergehenden Ansprüche, wobei der Schritt des Erhaltens (106) des ersten Signaturparameters (T) einen Schritt des Berechnens (1061) des ersten Signaturparameters (T) umfasst, der von den Verarbeitungsmitteln des Benutzergeräts umgesetzt wird.

7. Signaturverfahren mit Pseudonym nach einem der Ansprüche 1 bis 5, wobei der Schritt des Erhaltens (106) des ersten Signaturparameters (T) einen Schritt des Übertragens (1062) durch die Schnittstellenmittel des Benutzergeräts der ersten bestimmten zufälligen Ganzzahl (a) zu einer entfernten Verarbeitungsvorrichtung und einen Schritt des Empfangens (1062) durch die Schnittstellenmittel des Benutzergeräts des ersten Signaturparameters (T), der durch die entfernte Verarbeitungsvorrichtung berechnet und gleich *Ah^{a}* ist, umfasst.

8. Signaturverfahren mit Pseudonym nach einem der vorhergehenden Ansprüche, wobei der Schritt des Erhaltens (105) des dritten Signaturkoeffizienten (R₃) einen Schritt des Berechnens (1051) des dritten Signaturkoeffizienten (R₃) umfasst, der von den Verarbeitungsmitteln des Benutzergeräts umgesetzt wird.

9. Signaturverfahren mit Pseudonym nach einem der Ansprüche 1 bis 7, wobei der Schritt des Erhaltens (105) des dritten Signaturkoeffizienten (R₃) Folgendes umfasst:
- einen Schritt des Berechnens (1052) durch die Verarbeitungsmittel des Benutzergeräts eines vierten Signaturkoeffizienten B₁ gleich *A^{r_x}h^{a-r_x-r_f-r_b}* und eines fünften Signaturkoeffizienten B₂ gleich *h^{-r_a}*,
- einen Schritt des Übertragens (1052) durch die Schnittstellenmittel der Benutzervorrichtung des vierten und fünften Signaturkoeffizienten B₁ und B₂ zu einer entfernten Verarbeitungsvorrichtung,
- einen Schritt des Empfangens (1052) durch die Schnittstellenmittel des Benutzergeräts des dritten Signaturkoeffizienten (R₃),
wobei der dritte Signaturkoeffizient (R₃) von der entfernten Verarbeitungsvorrichtung berechnet wird und gleich e(B1, g₂)e(B2,w) ist.

10. Signaturverfahren mit Pseudonym nach einem der Ansprüche 1 bis 7, wobei der Schritt des Erhaltens (105) des dritten Signaturkoeffizienten (R₃) Folgendes umfasst:
- einen Schritt des Berechnens (1053) durch die Verarbeitungsmittel des Benutzergeräts eines sechsten Signaturkoeffizienten B gleich *A^{r_x}h^{a-r_x-r_f-r_b}*,
- einen Schritt des Übertragens (1053) durch die Schnittstellenmittel des Benutzergeräts des sechsten Signaturkoeffizienten B und der zweiten bestimmten zufälligen Ganzzahl (r_a) zu einer entfernten Verarbeitungsvorrichtung,
- einen Schritt des Empfangens (1053) durch die Schnittstellenmittel des Benutzergeräts des dritten Signaturkoeffizienten (R₃),
wobei der dritte Signaturkoeffizient (R₃) von der entfernten Verarbeitungsvorrichtung berechnet wird und gleich e (B, *g*₂)*W^{-r_a}* ist.

11. Verfahren zur Prüfung einer Signatur einer Mitteilung (m) und eines Pseudonyms, wobei die Signatur (σ) und das Pseudonym (nym) gemäß dem Verfahren nach einem der vorhergehenden Ansprüche erzeugt werden, wobei das Prüfverfahren die folgenden Schritte umfasst, die von Verarbeitungsmitteln eines Prüfservers (SC) umgesetzt werden:
∘ Berechnen (301) eines ersten Prüfkoeffizienten R'₁ gleich *h^{s_f}dpk^{s_x}nym^{-c}*,
∘ Berechnen (302) eines zweiten Prüfkoeffizienten R'₂ gleich *nym^{s_a}h^{-s_d}dpₖ^{-s_b}*,
∘ Berechnen (303) eines dritten Prüfkoeffizienten R'₃ gleich *e*(*T,g₂^{s-x}V^{-s_f-s_b}W^{-s_a}*[*e*(*g*₁,*g*₂)*e*(*T*,*w*)⁻¹]^{-*c*},
∘ Berechnen (304) eines Prüfparameters c' durch Anwenden einer Hashfunktion H auf einen Parameter öffentlichen Bereichs (dpk), auf das Pseudonym (nym), auf einen ersten Signaturparameter (T) auf den ersten, zweiten und dritten Prüfkoeffizienten (R'₁, R'₂, R'₃) und auf die Mitteilung (m),
∘ Vergleichen (305) eines zweiten Signaturparameters (c) und des Prüfparameters (c'), wobei die Signatur gültig ist, falls der zweite Signaturparameter (c) und der Prüfparameter (c') gleich sind,
wobei:
∘ f eine modulare Ganzzahl ist, die einen ersten Codeteil bildet, x eine modulare Ganzzahl ist, die einen zweiten Codeteil bildet, A ein dritter Codeteil ist, der gleich (*g*ₗ*h^{f}*)^{1/(*x*+*γ*)}ist,
∘ *g*₁ und h erste und zweite Elemente einer Gruppe G₁ sind, wobei das erste und das zweite Element *g*₁ und h der Gruppe G₁ öffentliche Parameter sind, und
∘ *g*₂ ein Element einer Gruppe G₂ ist, wobei das Element *g*₂ der Gruppe G₂ ein öffentlicher Parameter ist,
∘ γ eine modulare Ganzzahl ist, die einen geheimen Verwaltungscode bildet, so dass w gleich *g*₂^{γ}, wobei w ein öffentlicher Parameter ist,
∘ e eine bilineare Anwendung von G₁ x G₂ in einer Gruppe G_{T} ist, wobei die Anwendung e ein öffentlicher Parameter ist,
∘ Z, V und W ein erstes, zweites und drittes Kopplungsresultat jeweils gleich e(A, *g*₂), e (h, *g*₂) und e(h,w) sind, und
∘ a, r_a, r_f, r_x, r_b, r_d erste, zweite, dritte, vierte, fünfte und sechste zufällige modulare Ganzzahlen sind,
∘ T ein erster Signaturparameter gleich *Ah^{a}* ist,
∘ c ein zweiter Signaturparameter ist, der durch Anwenden der kryptografischen Hashfunktion H auf den Parameter öffentlichen Bereichs dpk, auf das Pseudonym nym, auf den ersten Signaturparameter T, auf den ersten, zweiten und dritten Signaturkoeffizienten R₁, R₂, R₃ und auf die Mitteilung m berechnet wird, wobei der erste Signaturkoeffizient R₁ gleich *h^{r_f}dpk^{r_x}* ist, der zweite Signaturkoeffizient R₂ gleich *nym^{r_a}h^{r_d}dpk^{r_b}* ist, der dritte Signaturkoeffizient R₃ gleich *Z^{r_x}V^{a-r_x-r_f-r_b}W^{-r_a}* ist, und
∘ s_f, s_x, s_a, s_b, s_d des dritten, vierten, fünften, sechsten und siebten Signaturparameters jeweils gleich r_f + c.f, r_x + c.x, r_a + c.a, r_b + c.a.x et r_d + c.a.f sind.

12. Computerprogramm, das Programmcodeanweisungen für die Ausführung der Schritte des Verfahrens nach einem der vorhergehenden Ansprüche, wenn das Programm auf einem Computer ausgeführt wird, umfasst.

13. Benutzergerät (DU), das mindestens Speichermittel, Verarbeitungsmittel und Kommunikationsschnittstellenmittel umfasst, **dadurch gekennzeichnet, dass** es konfiguriert ist, um ein Signaturverfahren nach einem der Ansprüche 1 bis 10 umzusetzen.

14. Prüfserver (SC), der mindestens Speichermittel, Verarbeitungsmittel und Schnittstellenmittel umfasst, **dadurch gekennzeichnet, dass** er konfiguriert ist, um ein Prüfverfahren nach Anspruch 11 umzusetzen.

15. System **dadurch gekennzeichnet, dass** es mindestens ein Benutzergerät (DU) nach Anspruch 13 und mindestens einen Prüfserver (SC) nach Anspruch 14 umfasst.

## Claims

1. Method of signature with pseudonym (σ) of a message (m) by a user device (DU) comprising processing means, interface means and storage means,
the storage means of said user device storing a secret signature key (sk) as a function of at least:
∘ a modular integer f constituting a first key part,
∘ a modular integer x constituting a second key part,
∘ a third key part A equal to **(*g*₁*h^{f}*)**^{1/(*x*+*γ*)} where:
∘ *g*₁ and h are first and second elements of a group G₁, said first and second elements *g*₁ and h of the group G₁ being public parameters, and
∘ *g*₂ is an element of a group G₂, said element *g*₂ of the group G₂ being a public parameter,
∘ γ is a modular integer constituting a secret management key, such as w equal to ***g***₂*^{γ}*, where w is a public parameter,
and comprising the following steps implemented by the processing means of said user device:
∘ generation (101) of a pseudonym nym identifying the user (U) of said user device and equal to ***h^{f}dpk^{x}***, where dpk is a public domain parameter,
∘ determination (102) of first, second, third, fourth, fifth and sixth modular random integers a, r_a, r_f, r_x, r_b, r_d,
∘ calculation (103) of a first signature coefficient R₁ equal to ***h^{r_f}dpk^{r_x}***,
∘ calculation (104) of a second signature coefficient R₂ equal to ***nym^{r_a}h^{-r_d}dpk^{-r_b}***,
∘ obtaining (105) of a third signature coefficient R₃ equal to *Z^{r_x}V^{a-r_x-r_f-r_b}W^{-r_a}*,
where Z, V and W are first, second and third coupling results respectively equal to e(A, *g*₂), e(h, *g*₂) and e(h, w),
and e is a bilinear application of G₁ x G₂ in a group G_{T}, said application e being a public parameter,
∘ obtaining (106) of a first signature parameter T equal to *Ah^{a}*,
∘ calculation (107) of a second signature parameter c by applying a cryptographic hash function H to the public domain parameter dpk, to the pseudonym nym, to the first signature parameter T, to the first, second and third signature coefficients R₁, R₂, R₃ and to the message m,
∘ calculation (108) of third, fourth, fifth, sixth and seventh signature parameters s_f, s_x, s_a, s_b, s_d, respectively equal to r_f + c.f, r_x + c.x, r_a + c.a, r_b + c.a.x and r_d + c.a.f,
∘ generation (109) of said signature with pseudonym (σ) of said message (m) on the basis of said signature parameters (T, c, s_f, s_x, s_a, s_b, s_d).

2. Method of signature with pseudonym according to claim 1, comprising a generation step (200) for the generation of at least one element of the first key part (f) by the processing means of the user device (DU), a transmission step (201) for the transmission by the interface means of the user device of an identity datum generated on the basis of said at least one generated element of said first key part, so as to prove, by a zero-knowledge proof algorithm, to a key-managing authority (AG), knowledge by the user device of said at least one generated element of the first key part, a reception step (202) for the receipt by the interface means of the user device of second (x) and third (A) key parts generated by the key-managing authority.

3. Method of signature with pseudonym according to one of the previous claims, wherein the first coupling result (Z) and/or the second and third coupling results (V, W) are calculated prior to the step of obtaining the third signature coefficient (R₃).

4. Method of signature with pseudonym according to one of the previous claims, wherein the second and third coupling results (V, W) are public parameters.

5. Method of signature with pseudonym according to one of the previous claims, comprising a reception step (203) for the receipt by the interface means of the user device, of the first coupling result (Z) calculated by a processing unit of a management server (SAG) of a key-managing authority.

6. Method of signature with pseudonym according to one of the previous claims, wherein the obtaining step (106) for obtaining the first signature parameter (T) comprises a calculation step (1061) for calculating the first signature parameter (T) implemented by the processing means of the user device.

7. Method of signature with pseudonym according to one of claims 1 to 5, wherein the obtaining step (106) for obtaining the first signature parameter (T) comprises a transmission step (1062) for the transmission by the interface means of the user device of the first determined random integer (a) to a remote processing device and a reception step (1062) for the receipt by the interface means of the user device of the first signature parameter (T) calculated by the remote processing device and equal to *Ah^{a}*.

8. Method of signature with pseudonym according to one of the previous claims, wherein the obtaining step (105) for obtaining the third signature coefficient (R₃) comprises a calculation step (1051) for calculating the third signature coefficient (R₃) implemented by the processing means of the user device.

9. Method of signature with pseudonym according to one of claims 1 to 7, wherein the obtaining step (105) for obtaining the third signature coefficient (R₃) comprises:
- a calculation step (1052) for the calculation by the processing means of the user device of a fourth signature coefficient B₁ equal to *A^{r_x}h^{a-r_x-r_f-r_b}* and of a fifth signature coefficient B₂ equal to *h^{-r_a}*,
- a transmission step (1052) for the transmission by the interface means of the user device of said fourth and fifth signature coefficients B₁ and B₂ to a remote processing device,
- a reception step (1052) for the receipt by the interface means of the user device of the third signature coefficient (R₃),
said third signature coefficient (R₃) being calculated by the remote processing device and equal to e(B1, *g*₂)e(B2,w).

10. Method of signature according to one of claims 1 to 7, wherein the obtaining step (105) for obtaining the third signature coefficient (R₃) comprises:
- a calculation step (1053) for the calculation by the processing means of the user device of a sixth signature coefficient B equal to *A^{r_x}h^{a-r_x-r_f-r_b}*,
- a transmission step (1053) for the transmission by the interface means of the user device of the sixth signature coefficient B and of the second determined random integer (r_a) to a remote processing device,
- a reception step (1053) for the receipt by the interface means of the user device of the third signature coefficient (R₃),
said third signature coefficient (R₃) being calculated by said remote processing device and equal to e(B, *g*₂)*W^{-r_a}*.

11. Method of controlling a signature of a message (m) and a pseudonym, said signature (σ) and said pseudonym (nym) being generated according to the method of any one of the previous claims, said method of control comprising the following steps implemented by processing means of a control server (SC) :
∘ calculation (301) of a first control coefficient R'₁ equal to ***h^{s_f}dpk^{s_x}nym^{-c}***,
∘ calculation (302) of a second control coefficient R'₂ equal to ***nym^{s_a}h^{-s_d}dpk^{-s_b}***,
∘ calculation (303) of a third control coefficient R'₃ equal to ***e*(*T*,*g*₂*^{s_x}V^{-s_f-s_b}W^{-s_a}*[*e*(*g*₁,*g*₂)*e*(*T*,*w*)⁻¹]^{-*c*}**,
∘ calculation (304) of a control parameter c' by applying a hash function H to a public domain parameter (dpk), to the pseudonym (nym), to a first signature parameter (T), to the first, second and third control coefficients (R'₁, R'₂, R'₃) and to the message (m),
∘ comparison (305) of the second signature parameter (c) with the control parameter (c'), said signature being valid in case of equality of the second signature parameter (c) and of the control parameter (c'),
where:
∘ f is a modular integer constituting a first key part, x is a modular integer constituting a second key part, A is a third key part equal to **(*g*₁*****h**^{f}***)**^{1/(*x*+*γ*)},
∘ *g*₁ and h are first and second elements of a group G₁, said first and second elements *g*₁ and h of the group G₁ being public parameters, and
∘ *g*₂ is an element of a group G₂, said element *g*₂ of the group G₂ being a public parameter,
∘ γ is a modular integer constituting a secret management key, such as w equal to ***g***₂*^{γ}*, where w is a public parameter,
∘ e is a bilinear application of G₁ x G₂ in a group G_{T}, said application e being a public parameter,
∘ Z, V and W are first, second and third coupling results respectively equal to e(A, *g*₂), e (h, *g*₂) and e(h,w), and
∘ a, r_a, r_f, r_x, r_b, r_d are first, second, third, fourth, fifth and sixth modular random integers,
∘ T is a first signature parameter equal to *Ah^{a}*,
∘ c is a second signature parameter calculated by applying the cryptographic hash function H to the public domain parameter dpk, to the pseudonym nym, to the first signature parameter T, to first, second and third signature coefficients R₁, R₂, R₃ and to the message m, where the first signature coefficient R₁ is equal to ***h^{r_f}dpk^{r_x}***, the second signature coefficient R₂ is equal to ***nym^{r_a}h^{r_d}dpk^{r_b}***, the third signature coefficient R₃ is equal to *Z^{r_x}V^{a-r_x-r_f-r_b}W^{-r_a}*, and
o s_f, s_x, s_a, s_b, s_d are third, fourth, fifth, sixth and seventh signature parameters respectively equal to r_f + c.f, r_x + c.x, r_a + c.a, r_b + c.a.x and r_d + c.a.f.

12. Computer programme product comprising programme code instructions for executing the steps of the method according to any one of the previous claims, when said programme is run on a computer.

13. User device (DU) at least comprising storage means, processing means and communication interface means, **characterised in that** it is configured to implement a method of signature according to any one of claims 1 to 10.

14. Control server (SC) at least comprising storage means, processing means and interface means, **characterised in that** it is configured to implement a method of control according to claim 11.

15. System **characterised in that** it comprises at least one user device (DU) according to claim 13 and at least one control server (SC) according to claim 14.
